# EUROPÄISCHE PATENTANMELDUNG

(11) **EP 3 349 163 A1**
(43) Veröffentlichungstag der Anmeldung: **18.07.2018**
(21) Anmeldenummer: 17000059.0
(22) Anmeldetag: 13.01.2017
(51) Int. Cl.: G06Q 30/00

(54) **SYSTEM ZUR AUTHENTIFIZIERUNG VON ARZNEIMITTELN**

(71) Anmelder: ACS PharmaProtect GmbH, 10117 Berlin (DE)
(72) Erfinder: Kai, Hajostek, D-12407 Berlin (DE)
(74) Vertreter: Jungblut & Seuss

(57) **Zusammenfassung**

Die vorliegende Erfindung betrifft ein System zur sicheren Authentifizierung von Waren, z. B. von Arzneimitteln.

## Beschreibung

Die vorliegende Erfindung betrifft ein System zur sicheren Authentifizierung von Arzneimitteln.

Die Hersteller verschiedenster Waren sehen sich im zunehmenden Maße auf nationalen und internationalen Märkten mit Fälschungen ihrer Produkte konfrontiert. Das Risiko für den Originalhersteller besteht dabei nicht nur im entgangenen Umsatz und Gewinn, sondern auch in Rufschädigung durch Produkte mit schlechter Qualität. Darüber hinaus bestehen für die Abnehmer unter Umständen Sicherheitsgefahren bis hin zur Lebensgefahr, beispielsweise bei Arzneimittelfälschungen, aber auch bei Fälschungen sicherheitsrelevanter Flugzeugteile. Viele Hersteller versuchen daher ihre Produkte mit Sicherheitsmerkmalen zu kennzeichnen, z. B. mit Hologrammen. In zunehmendem Maße werden allerdings auch diese Sicherheitsmerkmale gefälscht.

Eine Möglichkeit zur Authentifizierung von Produkten ist das Anbringen einer individuellen Kennzeichnung an jedem einzelnen abgegebenen Produkt, z. B. in Form einer Seriennummer und/oder eines Barcodes. Ein derartiges System stößt schnelle an organisatorische Grenzen, wenn es um Massenprodukte, z. B. Arzneimittel geht. Allein in Deutschland werden von über 400 Herstellern, mehr als 56000 verschiedene Präparate in unterschiedlichsten Dosierungen und Packungsgrößen über 21000 Abgabestellen (Apotheken und Kliniken) angeboten (Stand: 2010). Bereits hieraus ist ersichtlich, dass es schlicht nicht praktikabel ist, dass jeder Hersteller ein eigenes Authentifizierungssystem entwickelt. Dazu kommen datenschutz- und wettbewerbsrechtliche Bedenken, wenn beispielsweise ein Hersteller über ein Authentifizierungssystem Zugriff auf die Verkaufsdaten von Apotheken bzw. von Verschreibungsdaten der Ärzte erlangen kann.

Es besteht daher die Aufgabe ein Authentifizierungssystem zu entwickeln, welches für Massenprodukte, beispielsweise Arzneimittel eine einfache und zuverlässige Authentifizierung ermöglicht, ohne dass die Produkthersteller Zugriff auf Verschreibungs- und Verkaufsdaten von Ärzten und Apothekern haben.

Zur Lösung dieser Aufgabe lehrt die Erfindung ein System zur Authentifizierung von Waren, die mit einer individuellen ID-Nummer gekennzeichnet sind, enthaltend ein erstes Computersystem mit einem ersten Datenspeicher mit Daten zu hergestellten Waren,
wobei die Warenhersteller jede in Verkehr gebrachte Ware an das erste Computersystem unter Angabe der ID-Nummer melden,
wobei das erste Computersystem zu jeder ID-Nummer mindestens einen Produkt-Status speichert,
wobei der Produkt-Status anzeigt, ob eine Ware mit dieser ID-Nummer hergestellt wurde und zur Abgabe bestimmt ist, ob eine Ware mit dieser ID-Nummer bereits abgegeben wurde, ob eine Ware mit dieser ID-Nummer zurückgerufen wurde, ferner enthaltend ein zweites Computersystem mit mindestens einem zweiten Datenspeicher enthaltend Daten zu Waren, die zum Verkauf anstehen,
wobei die Endverkäufer der Waren vor jedem Verkaufsvorgang die zum Verkauf anstehende Ware an das zweite Computersystem unter Angabe der ID-Nummer melden,
wobei Daten der zum Verkauf anstehende Waren in den zweiten Datenspeicher abgelegt werden,
wobei das zweite Computersystem eine Abfrage an das erste Computersystem sendet, wobei die Abfrage im wesentlichen aus der ID-Nummer und einer eindeutigen Abfragenummer besteht,
wobei das erste Computersystem den zu der ID-Nummer gehörigen Produktstatus überprüft,
wobei das erste Computersystem das Ergebnis der Prüfung unter Angabe der der ID-Nummer und der Abfragenummer an das zweite Computersystem versendet, wobei die Ware nur verkauft werden kann, wenn das Ergebnis der Prüfung ist, dass die Ware mit der ID-Nummer hergestellt wurde, zur Abgabe bestimmt ist und nicht bereits abgegeben wurde und auch nicht zurückgerufen wurde, wobei das zweite Computersystem nach dem Verkauf der Ware eine Meldung über den Verkauf an das erste Computersystem sendet, wobei das erste Computersystem den Produktstatus der Ware mit der ID-Nummer in dem ersten Datenspeicher als verkauft kennzeichnet, gemäß Anspruch 1.

Vorteilhafte Ausgestaltungen des Systems sind Gegenstand der Unteransprüche.

Das erfindungsgemäße Authentifizierungssystem enthält mindestens 2 unterschiedliche Computersysteme mit je einem Datenspeicher. Das erste Computersystem mit einem ersten Datenspeicher enthält Daten zu allen hergestellten Waren, die von den verschiedenen Warenherstellern in Verkehr gebracht werden. Zu diesem Zwecke bringt der Warenhersteller an jedem hergestellten Produkt eine eindeutige ID-Nummer, nach den weiter unten dargestellten Möglichkeiten an. Die ID-Nummer kann vorteilhafterweise in Form eines Barcodes angebracht sein, beispielsweise in Form eines zweidimensionalen Barcodes (z.B. Data Matrix Code oder QR-Code). Jeder Produkthersteller meldet bei der Bereitstellung der Ware zum Verkauf die ID-Nummern an das erste Computersystem, welches die Daten in dem genannten ersten Datenspeicher festhält. Zu jeder individuellen ID-Nummer wird die Information gespeichert, dass die Ware zur Abgabe bestimmt ist.

Vor der Abgabe der Ware an den Endverbraucher wird die Abgabestelle (z. B. der Apotheker) die ID-Nummer der abzugebenden Ware an das zweite Computersystem senden. Dies kann z. B. in der Weise erfolgen, dass der Apotheker den an der Ware angebrachten Barcode scannt. Die mittels des Scanners ausgelesene ID-Nummer wird dann an das zweite Computersystem übermittelt und dort in den zweiten Datenspeicher abgelegt. Das zweite Computersystem sendet dann automatisch eine anonymisierte Abfrage an das erste Computersystem. Im Rahmen dieser anonymisierte Abfrage werden vom zweiten Computersystem an das erste Computersystem nur diejenigen Informationen übermittelt, die das erste Computersystem zum Überprüfen der ID-Nummer benötigt. Es handelt sich dabei im Wesentlichen um die ID-Nummer, die mit einer ebenfalls eindeutigen Abfragenummer (Transaktionsnummer) verbunden wird. Das erste Computersystem prüft daraufhin, ob die zur Abgabe bereitgehaltene Ware zur Abgabe bestimmt ist. In diesem Fall übermittelt das erste Computersystem eine entsprechende Antwort an das zweite Computersystem, nämlich unter Wiedergabe der Abfragenummer, der ID-Nummer und des Produktstatus. Das zweite Computersystem verbindet die vom ersten Computersystem erhaltenen Daten wieder mit den Informationen zur Abgabestelle (z. B. des Apothekers) und sonstiger abgaberelevanter Daten (z. B. verschreibender Arzt, Zuzahlungsinformationen, etc.) und sendet diese Informationen an die Verkaufsstelle.

Wenn das Produkt verkauft wird sendet der abgebende Verkäufer wiederum eine Mitteilung an das zweite Computersystem. Das zweite Computersystem meldet dem ersten Computersystem, dass die Ware mit der entsprechenden ID-Nummer verkauft wurde. Bei einer erneuten Abfrage eines Produktes mit der identischen ID-Nummer kann das erste Computersystem eine Warnung versenden. In diesem Fall handelt es sich bei dem Produkt höchstwahrscheinlich um eine Fälschung, so dass das Produkt nicht abgegeben wird und ggf. ergänzende Maßnahmen in die Wege geleitet werden.

Im Rahmen des ersten Computersystems wird daher zu jeder ID-Nummer eine Status-Information gespeichert, die Information darüber enthält, ob die Ware zur Abgabe bestimmt ist und ob eine Ware mit der ID-Nummer bereits abgeben wurde. Zusätzlich kann weitere Status-Information festgehalten werden, beispielsweise ob Ware mit der ID-Nummer vom Hersteller zurückgerufen wurde (z.B. wegen zwischenzeitlich festgestellter Qualitätsmängel) oder weil die Lagerfähigkeit überschritten wurde. Die Markierung jeder einzelnen ID-Nummer kann beispielsweise durch einen zusätzlich gespeicherten Zeichencode erfolgen, wobei beispielsweise die Ziffer 1 für eine zur Abgabe bestimmte Ware steht, die Ziffer 2 für eine Ware, die bereits abgegeben wurde, eine Ziffer 3 für eine Ware, die vom Hersteller zurückgerufen wurde, etc.

Im Rahmen des erfindungsgemäßen Systems ist es von hoher Wichtigkeit, dass die ID-Nummer für jedes einzelne hergestellte Produkt eindeutig festgelegt wird. Dies könnte beispielsweise in der Weise erfolgen, dass den verschiedenen Herstellern des Systems zufällig erzeugte Nummern zur Verfügung gestellt werden. In vielen Fällen ist es sinnvoll, einen speziellen Nummernkreis mit einer festgelegten Stellenzahl zu definieren. Dies könnte beispielsweise in der Weise erfolgen, dass eine vierzigstellige Zeichenfolge so aufgebaut wird, dass die ersten zehn Zeichen eine Codierung für den Hersteller enthalten, die folgenden zehn Zeichen eine Codierung des Produktes (unter Einbeziehung von Dosierung und Packungsgröße), die folgenden zehn Zeichen eine Chargenbezeichnung darstellen und die zuletzt angefügten zehn Zeichen eine Seriennummer darstellen. Optional kann noch ein Verfalldatum Mitbestandteil der ID-Nummer sein. Die beschriebene ID-Nummer kann rein numerisch gebildet sein, es können aber auch alphanumerische ID-Nummern verwendet werden. Wie oben bereits ausgeführt werden die abgegebenen Waren vorzugsweise mit der ID-Nummer in ausgeschriebener Form, wie auch als Barcode (insbesondere als 2-D Barcode, wie z.B. Data Matrix-Code oder QR-Code) gekennzeichnet, so dass die Abfrage vollautomatisch, notfalls aber auch manuell erfolgen kann.

Die ID-Nummer enthält optional noch ein oder mehrere Prüfziffern, die eine Verifizierung der abgelesenen Nummer erlauben. Darüber hinaus kann die ID-Nummer noch zusätzlich Länderinformationen enthalten.

Das System kann weiterhin vorsehen, dass zwischengeschaltete Händler, z. B. Großhändler eine Verifizierung ihrer gehandelten Waren vornehmen können. Die Abfrage durch den Großhändler kann entweder durch direkten Abgleich mit dem ersten Computersystem und dessen angeschlossenen ersten Datenspeicher erfolgen, sie kann aber auch über den an das zweite Computersystem angeschlossenen zweiten Datenspeicher erfolgen.

Weiterhin besteht die Möglichkeit ein drittes Computersystem mit angeschlossenem drittem Speicher vorzusehen. Das dritte Computersystem kann beispielsweise das Computersystem einer Aufsichtsbehörde sein, die im Fall der Identifizierung einer gefälschten Ware alle verfügbaren Informationen über die Ware mit der entsprechenden ID-Nummer zusammenführt, nämlich die Daten des Herstellers aus dem ersten Computersystem und die Daten des Verkaufsversuchs oder der Verkaufsversuche aus dem zweiten Computersystem. Auf diese Weise besteht die Möglichkeit, dass beispielsweise eine Aufsichtsbehörde sich ein Bild darüber verschafft, ob hinsichtlich der Fälschungsversuche Muster zu erkennen sind, beispielsweise dass in einer bestimmten Apotheke oder in einer bestimmten Region vermehrt Fälschungsversuche auftreten. In diesem Fall können weitergehende Maßnahmen ergriffen werden (z.B. Einschaltung von Polizei und Staatsanwaltschaft).

In einer weiteren optionalen Ausgestaltung des Systems können das erste Computersystem und/oder das zweite Computersystem auch in Form von Clustern vorliegen. So könnte beispielsweise das erste Computersystem in verschiedene Teilsysteme aufgeteilt sein, so dass beispielsweise jedem Hersteller ein Teilsystem zugeordnet ist. Auf diese Weise kann der Datenschutz weiter verbessert werden, indem jeder Hersteller tatsächlich nur Zugriff auf seine jeweiligen Daten hat. In ähnlicher Weise kann das zweite Computersystem beispielsweise so aufgeteilt sein, dass verschiedene Teilsysteme für verschiedene Regionen Daten bereitstellen und Abfragen erlauben. Auf diese Weise können ebenfalls datenschutz- und wettbewerbsrechtliche Sicherheitsvorkehrungen implementiert werden.

Es versteht sich von selbst, dass für die einzelnen Datenübertragungswege, insbesondere Übertragung der Herstellerdaten an das erste Computersystem, Übertragung der Verkaufsdaten an das zweite Computersystem, Abfrage der Daten des zweiten Computersystems an das erste Computersystem, Meldung der Verkaufsdaten des zweiten Computersystems an das erste Computersystem unter Nutzung gängiger Verschlüsselungsmethoden erfolgen, so dass unbefugte Zugriffe auf das System ausgeschlossen sind.

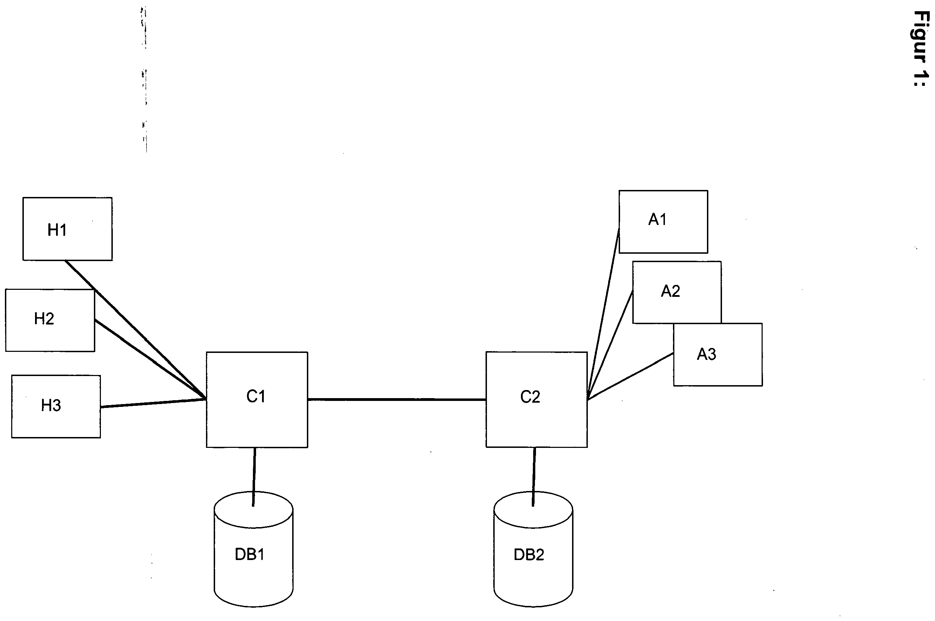

Das erfindungsgemäße Grundsystem für schematisch in der Figur 1 dargestellt. Auf der linken Seite sieht man das Computersystem 1 mit der angeschlossenen Datenbank 1. Zugriff auf das Computersystem 1 haben die verschiedenen Produkthersteller. Die Hersteller kennzeichnen jedes einzelne hergestellte Produkt mit einer individuellen ID-Nummer. Die ID-Nummer wird beim Verlassen des Werkes an das Computersystem 1 übergeben und in der Datenbank 1 abgelegt. Hierbei wird zu jeder ID-Nummer der Produkt-Status gespeichert. Dieser Status kann beispielsweise in einer Ziffer abgespeichert sein. Beispielsweise kann die Ziffer 1 für "zum Verkauf bereitgestellt" stehen, die Ziffer 2 für "verkauft", die Ziffer 3 für "zurückgezogen", die Ziffer 4 für "Haltbarkeitsdatum überschritten". Weitere Ausgestaltungen des Produktstatus sind selbstverständlich möglich. Im oben dargestellten Fall der Bereitstellung des Produktes zum Verkauf würde im Datenbanksystem 1 jede übergebene Nummer mit einer 1 gekennzeichnet.

Rechtsseitig in der Figur 1 ist das Computersystem 2 mit der angeschlossenen Datenbank 2 dargestellt. An das Computersystem 2 sind primär die Abgabestellen, z.B. die Apotheken angeschlossen. Der Apotheker, der ein gekennzeichnetes Produkt abgeben möchte kann beispielsweise den Barcode durch seine Scannerkasse scannen. Die durch den Scan erfasste ID-Nummer des abzugebenden Produktes wird an das Computersystem 2 übermittelt, das die ID-Nummer in der Datenbank 2 speichert. Zusätzlich zu der ID-Nummer wird in der Datenbank 2 abgelegt, wer die Abfrage initiiert hat, beispielsweise welche Apotheke oder bei Großapotheken welche Kasse innerhalb welcher Apotheke die Abfrage initiiert hat. Hierzu erhält jede an das Datenbanksystem 2 angeschlossene Abgabeeinrichtung eine eindeutige Kennung, beispielsweise in Form der IP-Adresse oder einer vergleichbaren individuellen Kennung.

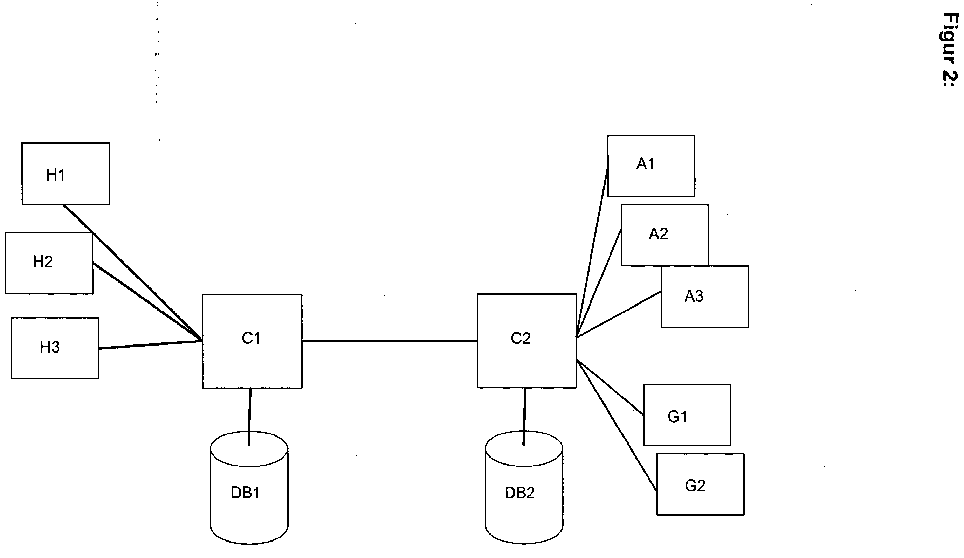

In einer optionalen Ausführungsform der Erfindung sind auch die Großhändler angeschlossen, wie es in der Figur 2 dargestellt ist.

Um die Authentifizierung mittels des erfindungsgemäßen Systems durchführen zu können sendet das Computersystem 2 die entsprechende ID-Nummer an das Computersystem 1, um von dort den Produktstatus zu erhalten. Im Rahmen dieses Vorganges wird die Produkt ID zusammen mit einer Abfragenummer an das Computersystem 1 versandt. Um den erfindungsgemäßen Zweck zu gewährleisten ist es dabei erforderlich, dass keinerlei Daten über die Abgabestelle übermittelt werden.

Im Falle einer derartigen Abfrage wird das Computersystem 1 die ID-Nummer des Produktes prüfen und den Produktstatus an das Computersystem 2 übermitteln, wobei es in der Datenbank 2 abgelegt wird. Das Computersystem 2 kann dann das Ergebnis der Abfrage wieder der Abgabestelle zuleiten.

Wenn der Verkaufsstatus der Produkt ID 1 (zum Verkauf bereitgestellt) ist, kann die Abgabestelle das Produkt abgeben. Im Falle eines anderen Status kann die Abgabe nicht erfolgen. In diesem Fall wird, in Abhängigkeit von dem Verkaufsstatus ein Warnhinweis abgegeben. Im Fall eines Produktes, das die Lagerzeit überschritten hat, kann das Produkt beispielsweise an den Hersteller zurückgesandt oder vernichtet werden. Im Fall, dass das System meldet, dass das Produkt bereits verkauft ist, kann mit größter Wahrscheinlichkeit von einem Fälschungsversuch ausgegangen werden. In diesem Fall wird die Abgabestelle beispielsweise unverzüglich einen entsprechenden Hinweis an den Hersteller senden. Optional können Mitteilungen an andere Stellen, beispielsweise Aufsichtsbehörden, Polizei, Staatsanwaltschaft, etc. erfolgen.

Entsprechende Meldungen werden versandt, wenn die Produkt-ID überhaupt nicht existiert.

In einer optionalen Ausführungsform des Systems (Figur 2) können auch Groß- und Zwischenhändler an das Computersystem 2 angeschlossen sein. Diese haben die Möglichkeit, eine einzelne Packung oder größere Gebinde zu authentifizieren. In diesem Fall ist zunächst keine Statusänderung im Computersystem 1 vorgesehen.

Selbstverständlich könnten erweiterte Systeme vorsehen, dass auch Großhandelsabfragen im System gespeichert werden, vorzugsweise im Rahmen des Computersystems 2 mit der angeschlossenen Datenbank 2. Auf diese Weise könnten Produktbewegungen nachverfolgt werden. Dies könnte im Fall von Fälschungen helfen, diejenigen Stellen zu identifizieren, an denen gefälschte Produkte in die Lieferkette eingeschleust werden. Allerdings nimmt der Aufwand mit der erfassten Datenmenge zu. Gleichzeitig müssen erhöhte Vorkehrungen getroffen werden, um datenschutzrechtliche und wettbewerbsrechtliche Bedenken auszuräumen.

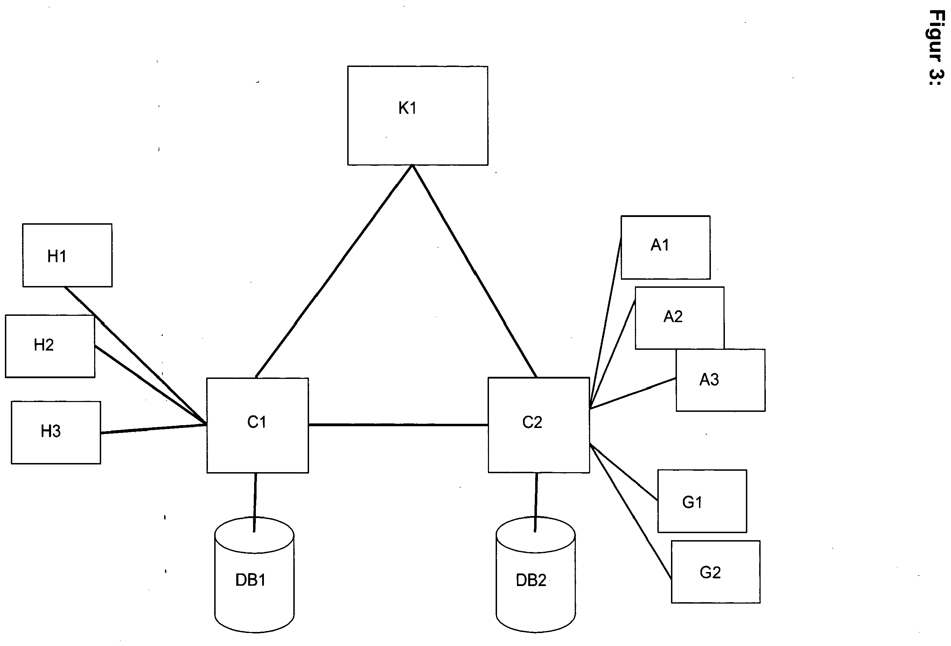

In einer weiteren optionalen Ausführungsform (Figur 3) enthält das System ein drittes Computersystem mit einer dritten Datenbank. Dieses dritte System kann beispielsweise von einer Aufsichtsbehörde betrieben werden und hätte zum Zwecke der Aufsicht einen Anschluss an das Computersystem 1 und das Computersystem 2. Im Falle einer identifizierten Fälschung könnte beispielsweise unmittelbar der gesamte dazugehörige Datensatz aus der Datenbank 2 und aus der Datenbank 1 an die Aufsichtsbehörde übermittelt werden, um den Vorfall einer vertieften Analyse zu unterziehen. Insbesondere könnten bei Auswertung verschiedener Fälschungsvorgänge geprüft werden, welche Arzneimittel in welchen Packungsgrößen betroffen sind und in welchen Regionen Fälschungen vorkommen. Diese Information kann extrem wertvoll sein, um die Vertriebswege der Fälschungen aufzudecken.

Anforderungen an die einzelnen Systemkomponenten sind nachfolgend beschrieben. Der Fachmann auf dem Gebiet kann anhand der Anforderungen ein System durch kommerziell erhältliche Komponenten aufbauen, betreiben und ggf. erweitern. Grundsatz ist die Sicherstellung der Hochverfügbarkeit, Ausfallsicherheit, Skalierbarkeit und Aufrechterhaltung des IT-Grundschutzes.

Die Systeme müssen für einen ordnungsgemäßen, störungsfreien Betrieb innerhalb von 120 Sekunden 10 Parallelverarbeitungen von jeweils 10. 000 ID-Nummern erlauben (entspricht ca. 100 Parallelverarbeitungen von ID-Nummern in 150 Millisekunden).

Die Systeme können beispielsweise folgendermaßen aufgebaut sein:

### Computersystem 1 (Warenherstellersystem):

1) Hardware:
   - Redundante Komponenten an zwei Standorten
   - Physikalische Datenbank-Server (redundante Auslegung, skalierbar)
   - Hochverfügbare, ausfallsichere und flexible Serverinfrastruktur
   - Verwendung von RAID-Technologie
2) Software:
   - Linux OS Enterprise
   - Oracle Real Application Cluster
   - Hohe Verfügbarkeit durch redundante Hardware und Datenbankinstanzen
   - Skalierbarkeit: mehr Kapazität durch die Einbindung weiterer Server in dem Cluster
   - Performance: Lastverteilung und aktives Nutzen aller Ressourcen in einem Cluster im Vergleich zu einem Failover-System
3) Netzwerk:
   - Redundante Verbindungen
   - Mind. 1GBit/s zwischen den Systemen
4) Sonstiges:
   - Antwortzeit:
   - Verarbeitungszeit Verifikation <150ms (99%)
   - Verarbeitungszeit Bereitstellen von Produktdaten < 120 sek je 10k PKG (99%)
   - Vertraulichkeit:
   - Verschlüsselung der DB-Systeme; Rechteverwaltung
   - Integrität/Authentizität:
   - Prüfsummen, HTTPS, SFTP, PKI,
   - Verfügbarkeit:
   - SLA, Redundanz, Change Management
□

### Computersystem 2 (Warenendverkäufersystem):

1) Hardware:
   - Redundante Komponenten an zwei Standorten
   - Physikalische Datenbank-Server (redundante Auslegung, skalierbar)
   - Hochverfügbare, ausfallsichere und flexible Serverinfrastruktur
   - Verwendung von RAID-Technologie
2) Software
   - vgl. Computersystem 1
3) Netwerk
   - vgl. Computersystem 1
4) Sonstiges
   - vgl. Computersystem 1

### Warenhersteller:

- IT zum Upload der Produktdaten
- Scannerfunktion
- Internetverbindung mindestens 1Mbit/s

### Endverkäufer (Einzelhandel):

- EDV mit Kassensoftware und Scannerfunktion
- Scanner
- Internetanbindung mindestens 1 Mbit/s

Weitere optionale Ausführungsmöglichkeiten sind nachfolgend beschrieben:
In einer weiteren Ausführungsform der Erfindung wird das gesamte System (enthaltend Computersystem 1, Datenspeicher 1, Computersystem 2, Datenspeicher 2, optionales Computersystem 3 mit Datenspeicher 3), auf einem einzigen Großrechner ausgeführt. Zwingende Voraussetzung ist in diesem Fall, dass die einzelnen Komponenten logisch voneinander getrennt sind, so dass keine Möglichkeit besteht, dass das Computersystem 1 unautorisiert auf Datenspeicher 2 zugreift oder Computersystem 2 auf Datenspeicher 1. Vorteile eines derartigen Systems sind natürlich kürzere Abfragezeiten, nachteilig ist der höhere Aufwand für die logische Trennung der Komponenten.

## Patentansprüche

1. System zur Authentifizierung von Waren, die mit einer individuellen ID-Nummer gekennzeichnet sind, enthaltend ein erstes Computersystem mit einem ersten Datenspeicher mit Daten zu hergestellten Waren,
wobei die Warenhersteller jede in Verkehr gebrachte Ware an das erste Computersystem unter Angabe der ID-Nummer melden,
wobei das erste Computersystem zu jeder ID-Nummer mindestens einen Produkt-Status speichert,
wobei der Produkt-Status anzeigt, ob eine Ware mit dieser ID-Nummer hergestellt wurde und zur Abgabe bestimmt ist, ob eine Ware mit dieser ID-Nummer bereits abgegeben wurde, ob eine Ware mit dieser ID-Nummer zurückgerufen wurde,
ferner enthaltend ein zweites Computersystem mit mindestens einem zweiten Datenspeicher enthaltend Daten zu Waren, die zum Verkauf anstehen, wobei die Endverkäufer der Waren vor jedem Verkaufsvorgang die zum Verkauf anstehende Ware an das zweite Computersystem unter Angabe der ID-Nummer melden,
wobei Daten der zum Verkauf anstehende Waren in den zweiten Datenspeicher abgelegt werden,
wobei das zweite Computersystem eine Abfrage an das erste Computersystem sendet, wobei die Abfrage im wesentlichen aus der ID-Nummer und einer eindeutigen Abfragenummer besteht,
wobei das erste Computersystem den zu der ID-Nummer gehörigen Produktstatus überprüft,
wobei das erste Computersystem das Ergebnis der Prüfung unter Angabe der der ID-Nummer und der Abfragenummer an das zweite Computersystem versendet,
wobei die Ware nur verkauft werden kann, wenn das Ergebnis der Prüfung ist, dass die Ware mit der ID-Nummer hergestellt wurde, zur Abgabe bestimmt ist und nicht bereits abgegeben wurde und auch nicht zurückgerufen wurde, wobei das zweite Computersystem nach dem Verkauf der Ware eine Meldung über den Verkauf an das erste Computersystem sendet, wobei das erste Computersystem den Produktstatus der Ware mit der ID-Nummer in dem ersten Datenspeicher als verkauft kennzeichnet.

2. System gemäß Anspruch 1 bei dem im Fall, dass
a) keine Ware mit der geprüften ID-Nummer hergestellt wurde,
b) die mit der ID-Nummer versehene Ware nicht zur Abgabe bestimmt ist,
c) eine mit der ID-Nummer versehene Ware bereits abgegeben wurde und/oder
d) die mit der ID-Nummer versehene Ware zurückgerufen wurde,
ein Alarmsignal auslöst.

3. System gemäß Anspruch 1 bei dem die ID-Nummern numerisch oder alphanumerisch gebildet sind.

4. System gemäß Anspruch 1 bei dem die ID-Nummern in Form eines zweidimensionalen Barcodes, insbesondere eines Data Matrix Codes oder QR-Codes an der Ware angebracht ist.

5. System gemäß Anspruch 1 bei dem das erste Computersystem und/oder das zweite Computersystem in Form von Clustern vorliegen, die jeweils nur Teile der Gesamtinformation des jeweiligen Systems enthalten.

6. System gemäß Anspruch 1, zusätzlich enthaltend ein drittes Computersystem mit Möglichkeit zur gezielten Abfrage von Information aus dem ersten Computersystem und/oder dem zweiten Computersystem.

7. System gemäß Anspruch 2 und 6 wobei ein gegebenenfalls ausgelöstes Alarmsignal automatisch an das dritte Computersystem übermittelt wird.
